## Europäisches Patentamt

## European Patent Office

## Office européen des brevets

(11) Publication number: **0 115 105**
**B1**

(12) **EUROPEAN PATENT SPECIFICATION**

(45) Date of publication of patent specification: **29.07.87**

(21) Application number: **83300351.0**

(22) Date of filing: **24.01.83**

(51) Int. Cl.⁴: **B 01 D 12/00, B 01 D 37/02 // B01D23/24**

(54) Solvent addition to deep bed filter.

(43) Date of publication of application:
**08.08.84 Bulletin 84/32**

(45) Publication of the grant of the patent:
**29.07.87 Bulletin 87/31**

(84) Designated Contracting States:
**BE DE FR GB IT NL**

(56) References cited:
**DE-A-1 517 656**
**DE-A-2 952 244**
**DE-B-1 517 627**
**DE-B-1 917 806**
**US-A-3 245 466**
**US-A-3 468 789**
**US-A-3 507 782**
**US-A-3 553 100**
**US-A-4 302 326**

(73) Proprietor: **AMSTED Industries Incorporated**
**3700 Prudential Plaza**
**Chicago, IL. 60601 (US)**

(72) Inventor: **Kozar, Robert Stephen**
**c/o 3700 Prudential Plaza**
**Chicago Illinois 60601 (US)**

(74) Representative: **Cockbain, Julian Roderick Michaelson et al**
**Frank B. Dehn & Co. European Patent Attorneys**
**Imperial House 15-19, Kingsway**
**London WC2B 6UZ (GB)**

Courier Press, Leamington Spa, England.

## Description

This invention relates to filter systems wherein a foreign material is separated from an aqueous suspension such as produced water and more particularly to the separation of highly viscous oils and other tar-like and waxy matter from water in which the oils and other particulate contaminate matter have become mixed.

Known methods and means for separating oils from water generally fall into two types. In one such type, the separation is accomplished by gravity separation in which an API (American Petroleum Institute) gravity separator is used. This separation relies on the difference in specific gravity of the water and the oil. Oil in the water gradually separates upwardly to float to the surface of the water from which oil may be skimmed. This type of separation is satisfactory for reducing oil concentration to proximately 150 ppm.

To reduce the concentration of oil to proximately 1—2 ppm, a second type of separation including a bed type filter containing a bed of a granular filter media has proved effective where the oil has a relatively low viscosity. The oil-water suspension is pumped through a filter bed wherein the oil is entrapped. The filter bed must be periodically backwashed or the like to remove the oil collected therein. One preferred manner of filter bed backwash or rejuvenation is set forth in U.S. Patent No. 3,500,774.

When the oil is viscous or has a waxy, tar-like, or gluey consistency, the use of the deep-bed filter has heretofore been impractical because the oil tends to form a mass of agglomerate that adheres to the granular filter media. Known methods and means of filter bed rejuvenation may be ineffective to remove the oil collected therein.

According to one feature of the present invention, there is provided a method of separating an oil in water suspension by filtration through a bed of granular filter media, said method further comprising periodically rejuvenating said bed of filter media to dislodge therefrom oil entrapped thereby, characterised in that said method comprises:

obtaining a primary oil in water suspension containing droplets of oil which is viscous or has a waxy tar-like or gluey consistency, the concentration of oil in said primary suspension being about 100—150 ppm;

contacting said primary suspension with a solvate comprising a solvent and an emulsifier whereby to produce a secondary suspension wherein the viscosity and/or adherency characteristics of the oil of said primary suspension are reduced, said solvate being employed in such an amount that the concentration thereof in said secondary suspension is substantially equal to the concentration of the oil in said secondary suspension; and passing said secondary suspension through said bed to entrap the oil in said bed whereby water substantially free of oil is obtained.

According to a further feature of the present invention, there is provided a filter system for separating an oil in water suspension according to the method of the present invention, said system comprising a holding tank for containing a primary suspension in water of an oil which is viscous or has a waxy, tar-like or gluey consistency,

a filter tank chargeable with a bed of granular filter media, connected to said holding tank by an inlet line and provided with an outlet line through which water substantially free from oil may be removed, and

rejuvenation means for dislodging oil entrapped by filter media in said filter tank, characterised in that said system further comprises

a solvate tank for containing a solvate comprising a solvent and an emulsifier for reducing the viscosity and/or adherency characteristics of the oil in said primary suspension, said solvate tank being connected via metering means to said inlet line, said metering means being so arranged as in operation to supply solvate to said inlet line for dispersion in said primary suspension to yield a secondary suspension wherein the concentration of said solvate is substantially equal to the concentration of oil thereby rendering said oil, subsequent to its retention by a bed of filter media in said filter tank, readily flushable with said bed of filter media.

An oil-water suspension including foreign particulate matters wherein the oil is highly viscous or has a waxy, tar-like, or asphaltic consistency so as to be highly adhesive and is present in the mixture in a concentration of proximately 100—150 ppm may be pumped into a deep-bed type filter. Before entering the filter a liquid solvate comprising a hydrocarbon based solvent mixed with an emulsifier may be added to the oil-water suspension.

The emulsifier helps to disperse the solvent within the oil-water suspension. Because of the oleophilic nature of the solvent, it is attached to the likewise dispersed droplets of oil in the oil-water suspension. The solvent interacts with the oil droplets to reduce their adhesive surface characteristics.

As the oil-water suspension flows through the filter bed, the interacted oil droplets become trapped in the interstices formed within the filter bed. A discharge from the filter is water substantially free of oil.

Upon the filter bed having entrapped a sufficient quantity of oil to cause an increase in inflow back pressure due to the restricted flow through the bed, all flow to the filter is stopped. By selective regulation of a series of valves and activation of a scrubber pump, the oil-water suspension in the filter, the filter media and entrapped oil are formed into a slurry which circulates in a closed-loop path. This path includes a cleaning receptacle. After circulation of the slurry for a selective time period, the oil-water portion of the slurry is drawn through the receptable leaving the filter media in a cleaned condition. The media is then returned to the filter and may receive a flow of the oil-water suspension.

The filter bed may also be rejuvenated by backwashing in situ wherein a backwash liquid flows gently through the bed in a reverse direction. The reverse flow expands the bed to aid in a release of the entrapped oil.

The filter system of this invention has several advantages over similar systems heretofore available.

First and of most significant importance is that a deep-bed type filter may now be used to separate, heavy, adhesive, viscous oils from oil-water mixtures. The water may be disposed of in an economical manner such as in a sanitary sewer or reused in a further process. The oil separated may be concentrated and further processed accordingly. Thus, a waste liquid which could not be disposed of in an environmentally acceptable manner is transformed into a form for ready disposition.

A further advantage of the system is its relative simplicity. Initial investment costs as well as operating costs are thus held to a minimum.

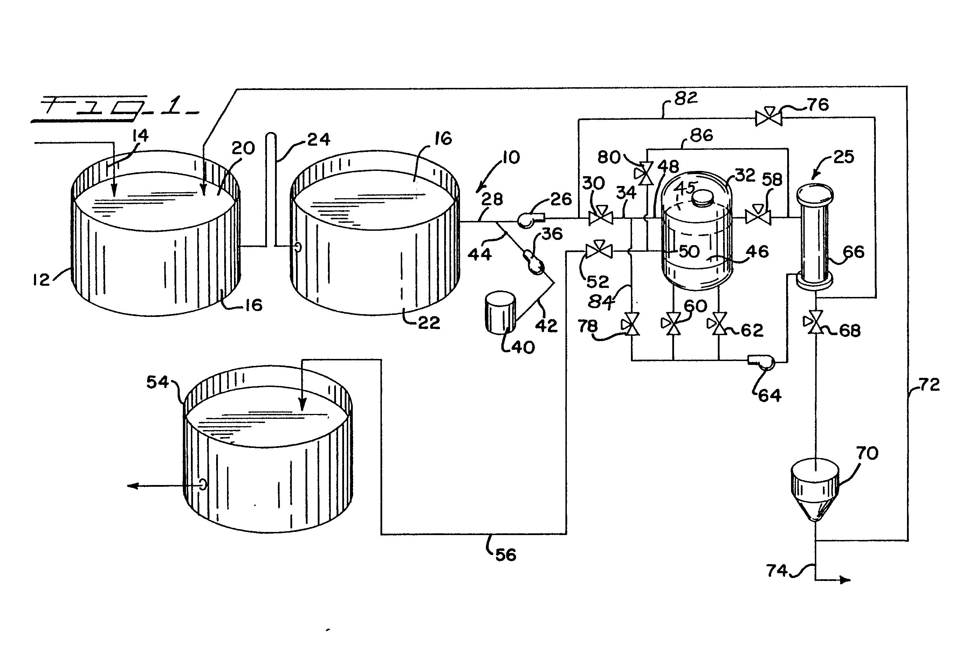

The invention will now be described by reference to the accompanying drawing, in which Fig. 1 is a schematic diagram of a filter system incorporating this invention.

The filter system of this invention is shown generally in Fig. 1 and designated 10. The crude oil obtained from the wells is asphaltic in nature and as such is highly viscous and sticky. To aid in production of this crude oil, water and steam may be injected within the rock strata holding the crude oil to increase the pressure within the strata and promote the flow of the crude oil.

The injected water or steam as well as water naturally within the strata becomes mixed with the crude oil as it is pumped from the wells. As is well known, newer wells produce little water and substantially all crude oil. As the age of a well increases, the amount of water in the crude oil increases to a point where there is little crude oil and substantially all water. This water is commonly referred to as "produced" water.

Initial crude oil-water separation may be accomplished in a gravity separating tank 12 with the crude oil-water mixture entering through an inlet pipe 14. Because the oil has a lesser specific gravity than water, over time the water settles to a lower portion of the gravity separating tank 12 to form a water phase 16. The oil in turn floats upwardly to an upper portion of the tank 12 to form a layer of oil 20. This layer 20 may be skimmed from the water phase 16 below. After gravity separation and skimming, the concentration of oil in the water phase 16 is reduced to proximately 100—150 ppm. After this gross separation, the water phase 16 remaining in the separating tank 12 flows to a holding tank 22 through a connecting line 24.

Further processing of the water phase 16 by the system 10 is done in a polishing portion 25. The polishing portion 25 has two modes of operation, an operative mode and a rejuvenation mode.

In the operative mode an input pump 26 is energized to draw the water phase 16 from the holding tank 22 through a pump inlet line 28. The water phase 16 then flows through a first valve 30 and into a filter tank 32 through a pump outlet line 34.

Concurrent with the energizing of the input pump 26, a metering pump 36 connected to a solvate storage tank 40 through a metering pump inlet line 42 is also energized. The tank 40 contains a solvate mixture comprising an aromatic hydrocarbon base solvent and an emulsifier. The solvent may be toluene, xylene or benzene, for example. Typical emulsifying agents are polyoxyethylene fatty ester, fatty acid alkanolamide, and polyethylene glycol oleic acid ester. The ratio of solvent to emulsifier may be as high as 20 to 1 and as low as 10 to 1 by weight. One ready-to-use, commercially available solvent-emulsifier mixture is made by Nalco Chemical Company of Oak Brook, Illinois, U.S.A. and identified and NALCLEAN 8960.

The metering pump 36 adds a selective quantity of the solvate to the pump inlet line 28 through a metering pump outlet pipe 44. The amount of solvate added in controlled to proximately equal the amount of oil in the water phase 16. For example, if the concentration of oil proximates 125 ppm, an equal amount of solvate is added to the water phase 16 being pumped by the input pump 26.

Because the hydrocarbon base solvent and water are inherently nonmiscible liquids, the emulsifier in the solvate promotes an intimate dispersion of the solvent within the water phase 16. Because the solvent and oil are both oleophilic, the solvent interacts with the droplets of oil in the water phase 16 to soften and decrease the viscosity of the oil droplets. This interaction may in some cases be limited to the mere surface of the oil droplets to reduce the adhesive quality of such.

The filter tank 32 contains a deep bed 45 of granular filter media 46. Examples of materials usable as filter media are sand, coal, garnets, ground walnut shells or mixtures thereof. As the water phase 16 flows through an upper inlet 48 in the filter tank 32 and then downward through the deep bed 45 of filter media 46, the droplets of oil are entrapped within interstices formed by the filter media granules 46. The water phase 16 is discharged through a lower outlet 50 with the concentration of oil reduced to 1—2 ppm. The water phase 16 now substantially free of oil flows through a second valve 52 and into a clean water storage tank 54 through a filter tank discharge line 56. The clean water in the tank 54 can be used for reinjection in oil bearing strata below, for example.

As the amount of oil separated and held by the filter bed 45 increases, the amount of pressure required to flow the water phase 16 through the bed 45 increases to a point that effective filtration ceases. At this point the polishing portion 25 of the system 10 is changed from its operative mode to its rejuvenation mode.

First, the input pump 26 and the metering pump 36 are de-energized, and the first and second valves 30, 52 are closed. Next, third, fourth and fifth valves 58, 60 and 62 are opened, and a scrubber pump 64 energized. The scrubber pump 64 forms the water phase 16, entrapped oil and filter media 46 in the filter tank 32 into a slurry which is circulated in a closed loop. This loop also includes a cleaning receptacle 66. Proximately 15 minutes of such circulation washes the oil from the filter media 46 whereupon a sixth valve 68 is opened to allow the oil and water in the slurry to drain through a separator such as a wedge wire device (not shown) within the cleaning receptacle 66. The wedge wire device allows the oil and water to flow therethrough while inhibiting passage of the filter media 46. Concurrently with the opening of the sixth valve 68, the first valve 30 is opened to allow an inflow of the water phase 16 from the holding tank 22 to replace the slurry and oil-water liquid drained through the receptacle 66.

When valves 30, 68 are open, only a small amount of the water phase 16 is added, i.e., proximately twice the volume of the filter tank 32, to the polishing portion 25 of the system 10. The slurry oil-water liquid drained through the cleaning receptacle 66 is collected in a secondary or backwash gravity separator 70. An oil portion of this slurry liquid separates upwardly from a water portion under the influence of gravity and may be removed by skimming or decanting. The water portion of the slurry, which may contain as much as several thousand ppm of oil, is returned from the backwah separator 70 to the gravity separator tank 12 for further processing through a return line 71. Any solid particulate in the separator 70 may be removed through a drain line 74.

To return the polishing portion 25 of the system 10 to its operative mode, first the third, fourth, fifth and sixth valves 58, 60, 62 and 68 are closed and seventh, eighth and ninth valves 76, 78 and 80 are opened. The scrubber pump 64 remains energized so that the granular filter media 46 is returned through a filter media return line 84 and reaccumulated in the filter tank 32 to reform the filter bed 45. During this reforming of the bed 45, the water portion of the slurry remains in circulation in part through slurry water return line 86. The rejuvenated filter bed 45 entraps the oil in the water portion so that within minutes the scrubber pump 64 is pumping clean water. With this complete, the seventh, eighth and ninth valves 76, 78 and 80 are closed and the scrubber pump 64 de-energized. The polishing portion 25 thus may be returned to its operative mode by opening the first and second valves 30, 52 and energizing pumps 26, 38.

It should be pointed out that filter bed rejuvenation may also be accomplished by backwashing with clean water, compressed air, gas, cleaning chemicals and combinations thereof. The method of rejuvenation, i.e., with a scrubber pump or in situ, also is in some degree controlled by the type of filter media used. Some media, for example sand, does not have the physical characteristics necessary to withstand the rejuvenation procedure set forth in detail above.

**Claims**

1. A method of separating an oil in water suspension (16) by filtration through a bed (45) of granular filter media (46), said method further comprising periodically rejuvenating said bed of filter media to dislodge therefrom oil entrapped thereby, characterised in that said method comprises:

obtaining a primary oil in water suspension (16) containing droplets of oil which is viscous or has a waxy, tar-like or gluey consistency, the concentration of oil in said primary suspension being about 100—150 ppm;

contacting said primary suspension with a solvate comprising a solvent and an emulsifier whereby to produce a secondary suspension wherein the viscosity and/or adherency characteristics of the oil of said primary suspension are reduced, said solvate being employed in such an amount that the concentration thereof in said secondary suspension is substantially equal to the concentration of the oil in said secondary suspension; and passing said secondary suspension through said bed (45) to entrap the oil in said bed whereby water substantially free of oil is obtained.

2. A method as claimed in claim 1 wherein said solvent comprises an aromatic hydrocarbon base solvent.

3. A method as claimed in claim 2 wherein said solvent comprises toluene, xylene or benzene.

4. A method as claimed in either of claims 2 and 3 wherein said emulsifier comprises polyethylene glycol oleic acid ester, polyoxyethylene fatty ester or a fatty acid alkanolamide.

5. A method as claimed in any one of the preceding claims wherein rejuvenation of said filter media (46) is achieved by stopping the passage for filtration of said secondary suspension through said bed (45), passing a quantity of said secondary suspension through said bed (45) to agitate said bed and thereby dislodge oil trapped therein, separating from the suspension oil dislodged from said bed (45), and recommencing the passage for filtration of said secondary suspension through said bed (45).

6. A filter system for separating an oil in water suspension according to the method of claim 1, said system comprising

a holding tank (22) for containing a primary suspension (16) in water of an oil which is viscous or has a waxy, tar-like or gluey consistency,

a filter tank (32) chargeable with a bed (45) of granular filter media (46), connected to said holding tank (22) by an inlet line (28, 34) and provided with an outlet line (50, 56) through which water substantially free from oil may be removed, and

rejuvenation means (64, 66) for dislodging oil entrapped by filter media in said filter tank (32), characterised in that said system further comprises

a solvate tank (40) for containing a solvate comprising a solvent and an emulsifier for reducing the viscosity and/or adherency characteristics of the oil in said primary suspension, said solvate tank (40) being connected via metering means (36) to said inlet line (28, 34), said metering means (36) being so arranged as in operation to supply solvate to said inlet line for dispersion in said primary suspension to yield a secondary suspension wherein the concentration of said solvate is substantially equal to the concentration of oil thereby rendering said oil, subsequent to its retention by a bed (45) of filter media (46) in said filter tank (32), readily flushable from said bed (45) of filter media (46).

**Patentansprüche**

1. Verfahren zum Trennen einer Öl in Wasser-Suspension (16) durch Filtrieren durch ein Bett (45) von körnigen Filtermedien (46), wobei diese Methode weiterhin einschließt, daß dieses Bett von Filtermedien periodisch Wiederbelebt (regeneriert) wird, um daraus darin eingeschlossenes Öl zu entfernen, dadurch gekennzeichnet, daß diese Methode umfaßt:

daß eine primäre Öl in Wasser-Suspension (16) erhalten wird, die Tröpfchen von Öl, das viskos ist oder eine wachsartige, teerähnliche oder klebrige Konsistenz hat, enthält, wobei die Konzentration des Öls in dieser primären Suspension etwa 100 bis 150 ppm ist;

daß diese primäre Suspension mit einem Solvat kontaktiert wird, das ein Lösungsmittel und einen Emulgator umfaßt, wodurch eine sekundäre Suspension erzeugt wird, worin die Viskositäts- und/oder Haftungseigenschaften des Öls dieser primären Suspension vermindert werden, wobei dieses Solvat in einer solchen Menge verwendet wird, daß die Konzentration desselben in dieser sekundären Suspension im wesentlichen gleich der Konzentration des Öls in dieser sekundären Suspension ist;

und daß diese skundäre Suspension durch dieses Bett (45) geleitet wird, um das Öl in diesem Bett einzuschließen, wodurch Wasser im wesentlichen frei von Öl erhalten wird.

2. Verfahren gemäß Anspruch 1, worin dieses Lösungsmittel einen aromatischen Kohlenwasserstoff als Basis-Lösungsmittel umfaßt.

3. Verfahren gemäß Anspruch 2, worin dieses Lösungsmittel Toluol, Xylol oder Benzol umfaßt.

4. Verfahren gemäß einem der Ansprüche 2 und 3, worin dieser Emulgator Polyethylenglykolölsäureester, Polyoxyethylenfettester oder ein Fettsäurealkanolamid umfaßt.

5. Verfahren gemäß einem der vorhergehenden Ansprüche, worin die Wiederbelebung dieser Filtermedien (46) erreicht wird, indem der Durchfluß zum Filtrieren dieser sekundären Suspension durch das Bett (45) abgebrochen wird, indem eine Menge dieser sekundären Suspension durch dieses Bett (45) geleitet wird, um dieses Bett zu bewegen und dadurch das darin eingeschlossene Öl zu entfernen, indem aus der Suspension das aus diesem Bett (45) entfernte Öl abgetrennt wird und indem der Durchfluß zum Filtrieren dieser sekundären Suspension durch dieses Bett (45) wieder aufgenommen wird.

6. Filtersystem zum Trennen einer Öl in Wasser-Suspension nach der Methode gemäß Anspruch 1, wobei dieses System umfaßt:

einen Vorratstank (22) zur Aufnahme einer primären Suspension (16) in wasser eines Öls, das viskos ist oder eine wachsartige, teerähnliche oder klebrige Konsistenz hat,

einen Filtertank (32), der mit einem Bett (45) eines körnigen Filtermediums (46) beladbar ist, der mit diesem Vorratstank (22) durch eine Einführungsleitung (28, 34) verbunden ist und mit einer Auslaßleitung (50, 56) versehen ist, durch die Wasser im wesentlichen frei von Öl entfernt werden kann,

und Wiederbelebungsmittel (64, 66) zum Entfernen des durch das Filtermedium in diesem Filtertank (32) eingeschlossenen Öls, dadurch gekennzeichnet, daß dieses System weiterhin umfaßt,

eine Solvattank (40) zur Aufnahme eines Solvats, das ein Lösungsmittel und einen Emulgator zur Verminderung der Viskositäts- und/oder Haftungseigenschaften des Öls in dieser primären Suspension umfaßt, wobei dieser Solvattank (40) mit der genannten Einführungsleitung (28, 34) über Meßeinrichtungen (36) verbunden ist, wobei diese Meßeinrichtung (36) so angeordnet ist, daß sie in Tätigkeit das Solvat zu dieser Einführungsleitung zur Verteilung in dieser primären Suspension liefert, um eine sekundäre suspension zu ergeben, worin die Konzentration dieses Solvats im wesentlichen gleich der Konzentration des Öls ist und auf diese Weise dieses Öl anschliessend an seine Zurückhaltung durch ein Bett (45) des Filtermediums (46) in diesem Filtertank (32) leicht auswaschbar aus diesem Bett (45) des Filtermediums (46) gemacht wird.

**Revendications**

1. Procédé de séparation d'une suspension huile-dans-eau (16) par filtration à travers un lit (45) de milieu filtrant granulaire (46), le procédé en question comprenant en outre le régénération périodique du lit de milieu filtrant précité de façon à en déloger l'huile qui s'y trouve emprisonnée, caractérisé en ce que le procédé question comprend:

l'obtention d'une suspension huile-dans-eau primaire (16) contenant de gouttelettes d'huile qui est visqueuse ou possède une consistance cireuse, goudronneuse ou collante, la concentration de l'huile dans la suspension primaire précitée variant d'environ 100 à 150 ppm;

la mise en contact de cette suspension primaire avec un solvate comprenant un solvant et un émulsif, de façon à produire une suspension secondaire dans laquelle les caractéristiques de viscosité et/ou d'adhérence de l'huile de ladite suspension primaire sont réduites, le solvate en question étant utilisé en une quantité telle que sa concentration dans ladite suspension secondaire soit sensiblement égale à la concentration de l'huile dans la suspension secondaire précitée; et

le passage de ladite suspension secondaire à travers le lit (45) précité de manière, à emprisonner l'huile dans le lit en question, si bien que l'on obtient de l'eau sensiblement exempte d'huile.

2. Procédé suivant la revendication 1, caractérisé en ce que le solvant en question est constitué d'un solvant à base d'hydrocarbures aromatiques.

3. Procédé suivant la revendication 2, caractérisé en ce que le solvant est constitué de toluène, de xylène ou de benzène.

4. Procédé suivant l'une quelconque des revendications 2 et 3, caractérisé en ce que l'émulsif précité est constitué d'esters de l'acide oléique et du polyéthylène glycol, d'esters d'acides gras du polyoxyéthylène et d'alcanolamides d'acides gras.

5. Procédé suivant l'une quelconque des revendications précédentes, caractérisé en ce que l'on parvient à la régénération du milieu filtrant en question (46) en arrêtant le passage pour la filtration de ladite suspension secondaire à travers le lit précité (45), en faisant passer une quantité de ladite suspension secondaire à travers ledit lit (45) de manière à agiter le lit en question et à ainsi déloger l'huile qui y est emprisonnée, en séparant de la suspension l'huile délogée du lit précité (45) et en réouvrant le passage pour la filtration de ladite suspension secondaire à travers le lit précité (45).

6. Système de filtration pour séparer une suspension huile dans eau suivant le procédé de la revendication 1, ledit système comprenant:

un réservoir de stockage (22) destiné à contenir une suspension primaire (16) dans de l'eau d'une huile qui est visqueuse ou qui possède consistance cireuse, goudronneuse ou collante,

un réservoir de filtration (32) pouvant être chargé d'un lit (45) d'un milieu filtrant granulaire (46), raccordé au réservoir de stockage précité (22) par une conduite d'entrée (28, 34) et pourvu d'une conduite de sortie (50, 56) par laquelle on peut évacuer de l'eau sensiblement exempte d'huile, et

un dispositif de régénération (64, 66) destiné à déloger l'huile emprisonnée par le milieu filtrant dans le réservoir de filtration précité (32),

caractérisé en ce que ledit système comprend encore:

un réservoir à solvate (40) destiné à contenir un solvate comprenant un solvant et un émulsif pour réduire les caractéristiques de viscosité et/ou d'adhérence de l'huile dans ladite suspension primaire, le réservoir à solvate précité (40) étant raccordé par un moyen de dosage (36) à ladite conduite d'entrée (28, 34), le dispositif de dosage précité (36) étant également agencé de manière à introduire, en cours de fonctionnement, du solvate dans ladite conduite d'entrée en vue de sa dispersion dans la suspension primaire, de façon à obtenir une suspension secondaire dans laquelle la concentration du solvate précité est sensiblement égale à la concentration de l'huile, de manière à rendre ainsi ladite huile, subséquemment à sa rétention par un lit (45) de milieu filtrant (46) dans le réservoir de filtration précité (32) aisément chassable du lit précité (45) de milieu filtrant (46).

Fig. 1